# EUROPÄISCHE PATENTANMELDUNG

(11) **EP 1 760 651 A1**
(43) Veröffentlichungstag der Anmeldung: **07.03.2007**
(21) Anmeldenummer: 05017811.0
(22) Anmeldetag: 17.08.2005
(51) Int. Cl.: G06Q 30/00, G06Q 10/00

(54) **Verfahren und Anordnung von Vorrichtungen zur Übermittlung von Nachrichten zwischen verschiedenen Komponenten eines computergestützten Filialsystems**

(71) Anmelder: Deutsche Post AG, 53113 Bonn (DE)
(72) Erfinder: Kranz, Jürgen, 50374 Erftstadt (DE); Westerweller, Jörg, 51570 Windeck / Rosbach (DE)
(74) Vertreter: Jostarndt, Hans-Dieter

(57) **Zusammenfassung**

Die Erfindung betrifft ein Verfahren und eine Anordnung von Vorrichtungen zur Übermittlung von Nachrichten zwischen wenigstens einem Client (10), Servicekomponenten (40) eines Backends und Umsystemen (30), bei dem/der im Bereich des Clients ein erstes Modul (21) einer Kommunikationskomponente (20) angeordnet ist. Durch Mittel des ersten Moduls (21) erfolgt eine Auswahl zwischen zwei Übertragungswegen für Nachrichten von dem Client zu den Servicekomponenten, wobei der erste Übertragungsweg statuslos ist und der Client eine Antwort erwartet, während der zweite Übertragungsweg statusbehaftet ist und der Client keine Antwort erwartet. Die Nachricht wird einem zweiten Modul (22) der Kommunikationskomponente (20) im Bereich des Backends übergeben, welche die Nachricht an eine Servicekomponente (40) weiterleitet. Dabei werden statuslose Aufrufe an eine Dialogkomponente (41) übergeben, während statusbehaftete Aufrufe einer Prozesskomponente (42) übermittelt werden. Die Prozesskomponente (42) arbeitet Prozesse im Zusammenspiel mit anderen Servicekomponenten ab, wobei die gesamte Nachrichtenübermittlung bei der Abarbeitung des Prozesses von einer Routing-Komponente (23) übernommen wird.

## Beschreibung

Die Erfindung betrifft ein Verfahren zur Übermittlung von Nachrichten zwischen wenigstens einem Client, Servicekomponenten eines Backends und Umsystemen über eine Kommunikationskomponente, bei dem im Bereich des Clients ein erstes Modul der Kommunikationskomponente angeordnet ist. Durch Mittel des ersten Moduls erfolgt eine Auswahl zwischen zwei Übertragungswegen für Nachrichten von dem Client zu den Servicekomponenten, wobei der erste Übertragungsweg statuslos ist und der Client eine Antwort erwartet, während der zweite Übertragungsweg statusbehaftet ist und der Client keine Antwort erwartet.

Die Erfindung betrifft ferner eine Anordnung von Vorrichtungen zur Durchführung des Verfahrens und ein computerlesbares Medium, das Befehle zum Ausführen der Schritte des Verfahrens auf einem Computermittel umfasst.

Gegenwärtig gibt es eine ganze Reihe von Geschäftsfeldern, die ein weit verzweigtes Filial- oder Automatensystem umfassen, um Kunden einen flächendeckenden Zugang zu verschiedenen Dienstleistungen eines Unternehmens zu ermöglichen. Beispielhaft können dazu Verkehrsunternehmen genannt werden, die ihren Kunden an zahlreichen Bahnhöfen und Flughäfen ihre Serviceleistungen anbieten. Hierzu gehören beispielsweise der Verkauf von Bahn- oder Flugkarten, die Annahme von Gepäck oder das Mieten von Kraftfahrzeugen.

Ein anderes Beispiel stellen Postunternehmen dar, die in fast jedem Ort in einem Land den Kunden eine umfangreiche Auswahl von Postdienstleistungen zur Verfügung stellen, wie zum Beispiel die Annahme von Briefen und Paketen, der Verkauf von Postwertzeichen sowie eine ganze Reihe von Bankdienstleistungen. Ferner können in Filialen Dienstleistungen im Bereich der Telekommunikation angeboten werden, wie es beispielsweise durch den Abschluss eines Mobiltelefonvertrags gegeben ist. Die genannten Dienstleistungen werden dabei nicht nur in eigenen Filialen des Postunternehmens, sondern auch an Automaten, bei Servicepartnern oder über Internetauftritte angeboten und die Gesamtheit der an ein Netzwerk angeschlossenen Frontendstellen wird im Folgenden zur Vereinfachung als Filialsystem bezeichnet.

Üblicherweise werden die Verkaufs- und Beratungsdienstleistungen aus Gründen der Kosteneffizienz und Sicherheit durch Informationstechnik unterstützt. Die Abbildung von Geschäftsprozessen in einem Filialsystem erfordert jedoch einen hohen informationstechnischen Aufwand und üblicherweise müssen unterschiedliche Arten von Daten zwischen einer Filiale und einer zentralen Datenbank oder einem Zentralrechner ausgetauscht werden. Dabei wird das Filialsystem beispielsweise durch eine Vielzahl von Clients gebildet, die über ein Netzwerk mit einem zentralen Verwaltungssystem verbunden sind.

Beim Betrieb eines solchen Filialsystems ist es erforderlich, dass Daten zwischen den angeschlossenen Frontends und dem zentralen Verwaltungssystem transportiert werden. Dabei wird das Verwaltungssystem im Folgenden auch als Backend bezeichnet. Zum Backend gehören wenigstens Komponenten zur Aufbereitung und Weiterleitung von Daten, wobei an das Backend mehrere Umsysteme angeschlossen sein können, welche die Weiterverarbeitung von Daten übernehmen. Zur Abwicklung von Vorgängen in einem Filialsystem ist somit der Transfer von Daten und Nachrichten zwischen den Clients und dem Backend erforderlich, wobei Daten auch innerhalb des Backends zwischen Daten verarbeitenden Komponenten transportiert werden müssen. Ferner erfolgt gegebenenfalls ein Datentransfer zwischen den Daten verarbeitenden Komponenten des Backends und den angeschlossenen Umsystemen.

Um einen möglichst effektiven Datentransfer zwischen den Frontends in Form von Clients und dem Backend zu realisieren, ist es bekannt, Nachrichtenkomponenten einzusetzen, über welche der gesamte Datentransfer zwischen diesen beiden Bereichen abgewickelt wird. Dabei können beispielsweise Datenübertragungssysteme eingesetzt werden, bei denen eine Zentraleinheit und mehrere Endgeräte durch wenigstens zwei unterschiedliche Übertragungskanäle verbindbar sind. Zum einen können Daten über einen statusbehafteten Offline-Übertragungsweg transferiert werden, wobei es sich um einen vergleichsweise langsamen Übertragungsweg handelt, der asynchron abläuft. Schneller zu transferierende Daten werden dagegen über einen als Online-Übertragungsweg zu bezeichnenden Weg transferiert, über den synchrone Prozesse durchgeführt werden. Dieser Online-Übertragungsweg ist statuslos und wird beispielsweise für die Abfrage von Kundendaten von einem Client bei einem Umsystem im Backend verwendet. Die Kommunikationskomponente weist vorzugsweise im Frontend Mittel zur Auswahl des jeweiligen Übertragungsweges auf.

Der Datentransfer bei der Aufbereitung, Verarbeitung und/oder Weiterleitung von Daten im Backend kann ebenfalls von einer zentralen Nachrichtenkomponente übernommen werden. Aufgabe der Erfindung ist es daher, eine Anordnung von Vorrichtungen bereitzustellen, welche über eine Nachrichtenkomponente einen möglichst effektiven Datentransfer zwischen mehreren Clients, Servicekomponenten eines Backends und angeschlossenen Umsystemen gewährleistet. Insbesondere sollen statuslose und statusbehaftete Aufrufe von Clients möglichst effektiv durchführbar sein.

Erfindungsgemäß wird diese Aufgabe durch eine Anordnung von Vorrichtungen mit den Merkmalen des unabhängigen Anspruchs 1 gelöst. Vorteilhafte Weiterbildungen der Anordnung ergeben sich aus den Unteransprüchen 2-5. Die Aufgabe wird ferner durch ein Verfahren nach Anspruch 6 gelöst. Vorteilhafte Ausführungsformen des Verfahrens ergeben sich aus den Unteransprüchen 7-12. Der Gegenstand des Anspruchs 13 betrifft ein computerlesbares Medium mit Befehlen zur Ausführung des Verfahrens auf einem Computermittel.

Die Erfindung umfasst ein Verfahren zur Übermittlung von Nachrichten zwischen wenigstens einem Client, Servicekomponenten eines Backends und Umsystemen, wobei jede dieser Komponenten an eine zentrale Kommunikationskomponente angeschlossen ist. Im Bereich des Clients ist ein erstes Modul der Kommunikationskomponente angeordnet und durch Mittel des ersten Moduls kann eine Auswahl zwischen zwei Übertragungswegen für Nachrichten von dem Client zu den Servicekomponenten getroffen werden. Der Bereich des Clients umfasst dabei die Applikation des Clients selbst oder eine Plattform, deren Funktionalitäten der Client nutzt. Dabei ist ein Merkmal des ersten Übertragungsweges, dass er statuslos ist und der Client eine Antwort erwartet. Der zweite Übertragungsweg ist dagegen statusbehaftet und der Client erwartet keine Antwort.

Das erfindungsgemäße Verfahren sieht vor, dass eine Nachricht und die Auswahl des Übertragungsweges vom ersten Modul an ein zweites Modul der Kommunikationskomponente übertragen wird. Das zweite Modul ist dem Backend zuzuordnen. Daraufhin wird die Nachricht vom zweiten Modul an eine Dialogkomponente im Backend übergeben, falls ein statusloser Übertragungsweg festgelegt wurde und es erfolgt eine Verarbeitung der Nachricht durch die Dialogkomponente. Die Übergabe des Aufrufs von dem Client an die Dialogkomponente kann beispielsweise über einen Web-Service erfolgen. Dadurch ist eine schnelle Übertragung von Aufrufen und Antworten beispielsweise über das Internet möglich. Ein Web Service stellt Dienstleistungen über das Internet (HTTP) zur Verfügung. Da Web-Services alle die gleichen offenen Standards zur Kommunikation nutzen, sind sie übergreifend kompatibel und miteinander verzahnbar. Falls dagegen ein statusbehafteter Übertragungsweg festgelegt wurde, wird die Nachricht vom zweiten Modul an eine Routing-Komponente der Kommunikationskomponente übergeben, welche die Nachricht zur Verarbeitung an eine Prozesskomponente übergibt.

In einem besonders bevorzugten Ausführungsbeispiel der Erfindung wird die Nachricht von der Prozesskomponente unter Einbeziehung weiterer Servicekomponenten verarbeitet, wobei die Kommunikation zwischen den beteiligten Servicekomponenten von der Routing-Komponente der Kommunikationskomponente gesteuert wird. Nachrichten werden vorzugsweise über eine Schnittstelle von der Kommunikationskomponente an die Dialogkomponente und/oder die Prozesskomponente übergeben, wobei vorzugsweise jede der Servicekomponenten im Backend über eine Schnittstelle zur Kommunikationskomponente verfügt.

Zur Verarbeitung der Nachrichten in der Dialogkomponente ist wenigstens ein Modul zur Durchführung von Logik ohne Einbeziehung von Umsystemen und ein Modul zur Durchführung einer Logik unter Einbeziehung von Umsystemen vorgesehen. Vorzugsweise umfasst die Dialogkomponente ferner ein drittes Modul zur Verarbeitung von komplexen Aufrufen unter Einbeziehung mehrerer Umsysteme. Die Nachrichten können in der Dialogkomponente vor der Verarbeitung in ein Datenmodell der Dialogkomponente und nach der Verarbeitung in ein Datenmodell des Empfängers transformiert werden.

In einem besonders bevorzugten Ausführungsbeispiel der Erfindung werden Nachrichten in einer Archivkomponente archiviert, bevor sie seriell zu einer anderen Servicekomponente weitergeleitet werden. Die Routing-Komponente ist vorzugsweise so ausgebildet, dass sie logischen Zieladressen von Nachrichten physische Adressen von Servicekomponenten und/oder Umsystemen zuordnet und die Nachrichten an die entsprechenden Schnittstellen übergibt.

Von der Erfindung umfasst sind ferner ein computerlesbares Medium, das Befehle zum Ausführen der Schritte des erfindungsgemäßen Verfahrens auf einem Computermittel aufweist, und eine Anordnung von Vorrichtungen zur Durchführung des erfindungsgemäßen Verfahrens. Die Anordnung besteht aus wenigstens einem Client in einem Frontend, der über eine Kommunikationskomponente mit einem Backend in Verbindung steht, wobei das Backend wenigstens durch mehrere Servicekomponenten gebildet wird. Das Frontend und das Backend sind über eine Kommunikationskomponente miteinander verbunden, an die auch mehrere Umsysteme angeschlossen sind. Die Kommunikationskomponente umfasst ein erstes Modul im Bereich des Clients und dieses Modul weist Mittel zur Auswahl eines statuslosen oder eines statusbehafteten Übertragungsweges auf.

Die Anordnung umfasst mehrere Servicekomponenten im Backend, zu denen wenigstens eine Dialogkomponente und eine Prozesskomponente mit jeweiligen Schnittstellen zur Kommunikationskomponente gehören. Ferner können weitere Servicekomponenten wie
beispielsweise eine Archivkomponente vorgesehen sein, welche Mittel zur Archivierung von Nachrichten und zur seriellen Weiterleitung der Nachrichten zu einer anderen Servicekomponente aufweist.

Ein wesentlicher Vorteil der Erfindung liegt in der starken Modularität der Anordnung von Vorrichtungen. Da alle Servicekomponenten in sich gekapselt und untereinander lose gekoppelt sind, kann das System flexibel erweitert oder verändert werden. Dies wird dadurch unterstützt, dass die Servicekomponenten über eine Schnittstelle in Verbindung mit einer zentralen Kommunikationskomponente stehen, welche vorzugsweise die gesamte Kommunikation der Komponenten untereinander übernimmt. Da die Servicekomponenten untereinander keine direkte Kommunikationsmöglichkeit haben, können sie einfach modifiziert werden. Ferner können neue Servicekomponenten leicht angebunden werden.

Vorteilhaft ist ferner, dass statuslose und statusbehaftete Prozesse effektiv abgearbeitet werden können, wobei die Prozesse jeweils von auf den Vorgang abgestimmten Komponenten übernommen werden. Im Zusammenspiel mit der Auswahl eines Übertragungsweges bereits im Frontend kann so eine möglichst schnelle Bearbeitung von Aufrufen über die Dialogkomponente erfolgen, während langsamere Prozesse über die Prozesskomponente abgewickelt werden können. Für die Verarbeitung von Prozessen durch die Prozesskomponente können dazu bekannte Messaging Systeme, wie beispielsweise das Produkt BizTalk Server von Microsoft, eingesetzt werden, während die Dialogkomponente vorzugsweise so ausgebildet ist, dass sie die verschiedenen Online-Aufrufe eines Retailsystems möglichst effektiv und schnell durchführen kann. Ein Aufruf eines Clients über die Dialogkomponente wird dabei vorzugsweise über einen Web-Service abgewickelt.

Die Verwendung einer Routing-Komponente zur Steuerung von Nachrichten zu den Servicekomponenten hat unter anderem den Vorteil, dass in der Routing-Komponente definiert werden kann, ob Datensätze seriell oder parallel bearbeitet werden sollen. Beispielsweise lässt sich so eine GoB- und GoBS-Fähigkeit (Grundsätze ordnungsmäßiger Buchführung/Grundsätze ordnungsmäßiger DV-gestützter Buchführungssysteme) des Systems erreichen, da festgelegt werden kann, dass Datensätze erst durch die Archivkomponente archiviert werden, bevor sie durch die übrigen Servicekomponenten seriell weiter bearbeitet werden. Es können jegliche Kombinationen aus serieller und paralleler Verarbeitung von Nachrichten vorgesehen werden. Ferner werden Datensätze nur mit logischen Adressen versehen, denen die Routing-Komponente entsprechende physische Adressen der Servicekomponenten oder Umsysteme zuordnet. Durch diese Maßnahme wird ebenfalls die Flexibilität des Systems erhöht, da Adressen von Zielsystemen verändert werden können, ohne dass die Struktur der Datensätze angepasst werden muss.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein besonders bevorzugtes Ausführungsbeispiel der erfindungsgemäßen Anordnung von Vorrichtungen;
- Fig. 2: ein besonders bevorzugtes Ausführungsbeispiel einer Dialogkomponente zur Übermittlung von Daten auf einem statuslosen Online-Übertragungsweg; und
- Fig. 3: ein besonders bevorzugtes Ausführungsbeispiel einer Prozesskomponente zur Übermittlung von Daten auf einem statusbehafteten Offline-Übertragungsweg.

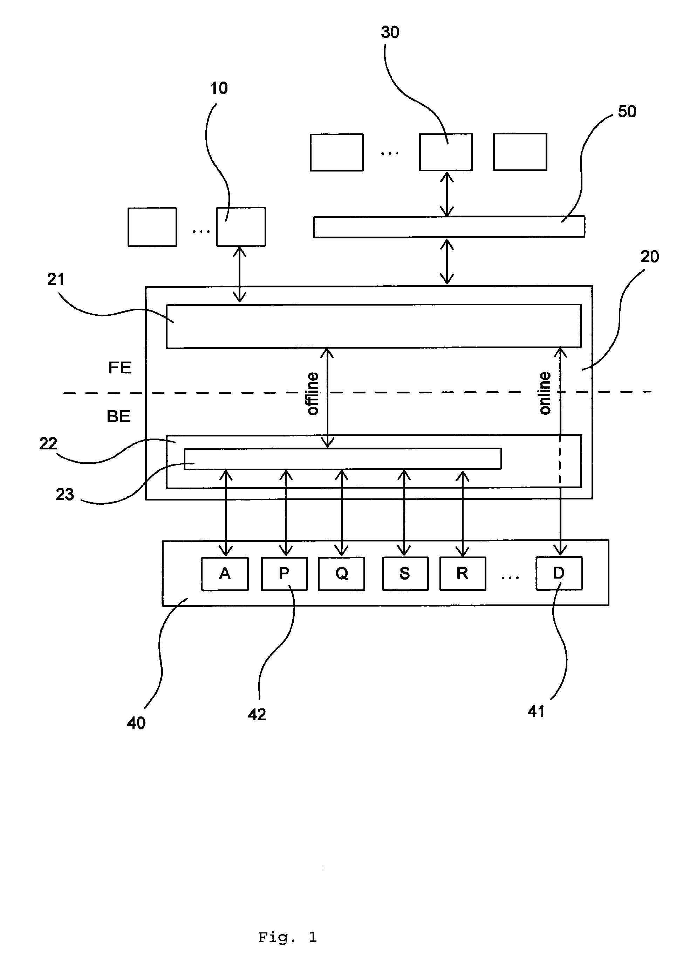

In Fig. 1 ist ein besonders bevorzugtes Ausführungsbeispiel der erfindungsgemäßen Anordnung von Vorrichtungen dargestellt. Ausführungsbeispiele des erfindungsgemäßen Verfahrens werden ebenfalls anhand dieser Abbildung dargelegt.

Bei der Anordnung in Fig. 1 handelt es sich beispielsweise um ein Retail-System, das die Durchführung von Geschäftsvorgängen an mehreren Clients 10 ermöglicht. Bei den Geschäftsvorgängen handelt es sich beispielsweise um Transaktionen wie Käufe, Einlieferungen, Vertragsabschlüsse oder Abfragen an Filialschaltern, Automaten oder Internetauftritten.

Die gesamte Anordnung wird vorzugsweise durch ein Computersystem gebildet, das möglichst einfach erweiterbar und veränderbar ist. Derartige Computeranordnungen für Filialsysteme werden üblicherweise stark modular ausgebildet. Bei den Modulen handelt es sich um standardisierte Komponenten, welche von mehreren anderen Komponenten verwendet werden können. Vorzugsweise können neue Komponenten nach dem "Plug&Play"-Prinzip angeschlossen werden, ohne dass das gesamte System angepasst werden muss. Dabei ist es bekannt, Computersysteme so auszubilden, dass mehrere Clients Funktionalitäten einer zugehörigen Plattform nutzen. Üblicherweise kann der Bereich des Clients und/oder der Plattform als Frontend bezeichnet werden. Die Clients können permanent über eine Client-Server-Struktur mit einem Backend verbunden sein. Die Erfindung bevorzugt jedoch eine offlinefähige Verbindung der Clients mit Daten verarbeitenden Komponenten eines Backends. Der Client muss sich somit bei der Durchführung eines Geschäftsvorgangs nicht fest mit einem Server verbinden, sondern kann auch ohne Betrieb des Backends arbeiten. Die lose gekoppelte Anbindung kann beispielsweise über Web-Services oder SOAP erfolgen.

Die Clients sind vorzugsweise als Computeranwendungen ausgeführt, die beispielsweise in mehreren Filialen eines Unternehmens angeordnet sind. An einem Client werden Vorgänge durchgeführt, welche die Verwendung von Daten verschiedener Umsysteme 30 erfordern. Da Unternehmen in Filialen oftmals verschiedene Dienstleistungen anbieten, müssen dazu verschiedene Umsysteme angebunden werden. Werden in den Filialen eines Postunternehmens beispielsweise Telekommunikationsdienstleistungen wie Telefonanschlüsse oder Mobiltelefonverträge verschiedener Anbieter angeboten, müssen die Daten der jeweiligen Systeme der Anbieter an den Clients in der Filiale verfügbar gemacht werden. Das Gleiche gilt für Stromverträge, Bankgeschäfte, Warenverkäufe und natürlich die üblichen postalischen Dienstleistungen wie beispielsweise die Annahme von Postsendungen oder der Verkauf von Postwertzeichen. Wird die Erfindung für ein Filialsystem eines Verkehrs- oder Transportunternehmens eingesetzt, müssen Daten für entsprechende Dienstleistungen erzeugt und bereitgestellt werden.

Ferner müssen die bei einem Vorgang an den Clients anfallenden Daten an die Umsysteme übermittelt werden. Darüber hinaus kann es erforderlich sein, dass die Clients bei der Bearbeitung von Vorgängen am Frontend auf eine veränderliche Geschäftslogik zugreifen müssen, welche zentral für alle Clients im Backend hinterlegt ist. Dies ist beispielsweise beim Abruf aktueller Währungskurse oder Zinsberechnungen der Fall.

Erfolgt im Backend eine Aufbereitung von Daten der Clients und/oder der Umsysteme, muss ferner die Kommunikation dieser Daten aufbereitenden Komponenten mit den Clients und Umsystemen ermöglicht werden. Dabei hat es sich als zweckmäßig erwiesen, dass die Aufbereitung von Daten im Backend gekapselt wird, so dass verschiedene Einzelkomponenten einzelne Verarbeitungsaufgaben übernehmen. In diesem Fall müssen ferner Daten zwischen diesen einzelnen Servicekomponenten transferiert werden.

Die erfindungsgemäße Anordnung umfasst wenigstens eine Kommunikationskomponente 20, welche zur Übermittlung von Daten zwischen einem Frontend FE in Form von Clients 10 und einem Backend BE aus Servicekomponenten 40 angeordnet ist. An die Kommunikationskomponente 20 ist ferner wenigstens ein Umsystem 30 angeschlossen. Kommunikationskomponenten zur Abwicklung des Nachrichtentransfers zwischen zwei Bereichen eines Computersystems sind bekannt und können auf übliche Weise realisiert werden. Nachrichten können unterschiedlich geformte Informationen tragen. Beispielsweise stellen Datensätze, Aufrufe oder Protokolle Nachrichten dar. Die gesamte Kommunikation der Kommunikationskomponente 20 basiert vorzugsweise auf SOAP (Simple Object Access Protocol) und XML (Extensible Markup Language).

XML ist eine Beschreibungssprache und stellt einen einheitlichen Standard für den einfachen, neutralen und flexiblen Datenaustausch dar. Eine SOAP-Nachricht ist nach dem Head-Body Pattern modelliert. Im Head-Bereich der Nachricht werden die Metainformationen der Nachricht untergebracht. Diese können Informationen über das Routing der Nachricht, über eine eventuelle Verschlüsselung und/oder über die Zugehörigkeit zu einer Transaktion umfassen. Der SOAP-Body enthält die eigentlichen Informationen der Nachricht, zu denen komplette Objekte, Parameter für aufzurufende Methoden oder Rohdatensätze gehören können. Die beiden Teile der SOAP-Nachricht werden vorzugsweise in einem SOAP-Envelope zusammengefasst.

Die Kommunikationskomponente 20 ist in wenigstens zwei Bereiche aufgeteilt, wobei ein erstes Modul 21 der Kommunikationskomponente dem Bereich der Clients zuzuordnen ist, während ein zweites Modul 22 dem Backend zuzuordnen ist. Das erste Modul 21 befindet sich somit innerhalb einer Anwendung auf dem Client oder auf einer Plattform, welche dem Client bestimmte Funktionalitäten bereitstellt und dieser Bereich wird in der Fig. 1 mit Frontend FE bezeichnet. Das zweite Modul 22 wird durch Funktionskomponenten z.B. auf einem Server gebildet und befindet sich in dem Ausführungsbeispiel der Fig. 1 in einem mit Backend BE bezeichneten Bereich. Die beiden Bereiche können funktional auch als zusammenhängende Kommunikationskomponente 20 angesehen werden und die Kommunikationskomponente bildet die zentrale Kommunikationsschnittstelle.

Die beiden Module der Kommunikationskomponente müssen jedoch nicht permanent miteinander verbunden sein. Damit die Clients des Frontends auch ohne ständige Anbindung an die Servicekomponenten des Backends arbeiten können, sind sie vorzugsweise offlinefähig ausgebildet. Die Verbindung der Frontends und damit des ersten Moduls mit dem zweiten Modul des Backends kann dabei über verschiedene Wege des Nachrichtentransfers verwirklicht werden. Beispielsweise können statuslose Online-Aufrufe über das Internet und einen Web-Service durchgeführt werden, während statusbehaftete Prozesse über eine temporäre Datenverbindung zwischen den beiden Modulen der Kommunikationskomponente durchgeführt werden können.

Die Kommunikationskomponente ist dafür zuständig, dass Daten vom Frontend zum Backend und zurück gelangen. Ferner übernimmt das zweite Modul 22 die Kommunikation einzelner Servicekomponenten des Backends untereinander und mit den Umsystemen 30. Die beiden Module 21 und 22 der Kommunikationskomponente 20 sind vom Aufruf her symmetrisch, sie bieten somit die gleichen Möglichkeiten zur Kommunikation an. Eine zu versendende Nachricht gelangt in die interne Datenhaltung des zweiten Moduls der Kommunikationskomponente, von dem aus die Nachrichtenverteilung angesteuert wird. Dieses Routing sorgt dafür, dass die Nachrichten an die richtigen Ausgänge geschickt werden, welche funktional gesehen beispielsweise einen Queuecharakter haben können, wenn Nachrichten von einer Servicekomponente aktiv abgeholt werden. In den Queues sammeln sich die Nachrichten solange, bis sie durch entsprechende Aktionen der Empfänger abgeholt werden.

Ist es dagegen vorgesehen, dass Servicekomponenten passiv beispielsweise über einen Adapter der Kommunikationskomponente beliefert werden, haben die entsprechenden Ausgänge keinen Queuecharakter. Dabei ist es bevorzugt, dass die Nachrichten lediglich logische Adressen aufweisen, aus denen die Kommunikationskomponente die entsprechenden physischen Adressen erzeugt und die Datensätze an den jeweiligen Port liefert.

In dem in Fig. 1 dargestellten Ausführungsbeispiel der Erfindung sind im Frontend mehrere Clients 10 und das erste Modul 21 der Kommunikationskomponente 20 dargestellt, während das Backend das zweite Modul 22 der Kommunikationskomponente 20 und wenigstens verschiedene Servicekomponenten zur Datenaufbereitung und/oder -verarbeitung umfasst. Die Servicekomponenten des Backends sind in ihrer Gesamtheit als Funktionsblock 40 dargestellt. An die Kommunikationskomponente 20 sind ein oder mehrere Umsysteme 30 angeschlossen, die durch eine Sicherheitsschicht 50 von der Kommunikationskomponente 20 getrennt sind.

Die Clients 10 stehen mit dem ersten Modul 21 der Kommunikationskomponente in Verbindung. Das erste Modul 21 ist so ausgebildet, dass es Mittel zur Auswahl umfasst, ob Daten von den Clients auf einem statuslosen oder einem statusbehafteten Übertragungsweg an das zweite Modul 22 der Kommunikationskomponente übertragen werden sollen. Der statuslose Weg wird im Folgenden auch als Online-Übertragungsweg bezeichnet, während der statusbehaftete Weg als Offline-Übertragungsweg bezeichnet wird.

Beispielsweise kann es vorgesehen sein, dass Abfragen von einem Client in Datenquellen bestimmter Umsysteme vorzugsweise auf einem Online-Weg durchgeführt werden sollen, damit diese Daten möglichst schnell am Client verfügbar sind. Online-Anfragen können auch als Request bezeichnet werden, der auf eine unmittelbare Antwort wartet. Online-Aufrufe unterstützen somit synchrone Prozesse, da ein Absender nach Absetzen eines Online-Calls auf die Rückkehr der Antwort wartet, bevor die Anwendung die Verarbeitung fortsetzt. Online-Aufrufe werden vorzugsweise über einen Web-Service durchgeführt.

Dagegen kann die Verarbeitung und Speicherung von Daten nach der Beendigung eines Geschäftsvorgangs an einem Client auf einem langsameren Offline-Weg erfolgen. Dabei handelt es sich um Nachrichten, die zwar abgeschickt werden, für die aber keine Antwort erwartet wird. Der Absender geht grundsätzlich davon aus, dass die abgeschickten Daten garantiert und in Reihenfolge zugestellt werden. Es handelt sich somit um asynchrone Verfahren, bei dem verschiedene Verarbeitungsprozesse voneinander entkoppelt werden. Die Initiierung von Prozessen über den Offline-Übertragungsweg kann beispielsweise über eine temporäre Verbindung der beiden Module der Kommunikationskomponente erfolgen.

Um eine möglichst hohe Modularität des Systems zu erreichen, sind die Servicekomponenten 40 für die Verarbeitung von Daten im Backend vorzugsweise in sich gekapselt. Die einzelnen Servicekomponenten bilden für die sie benutzenden Systeme eine Blackbox, so dass jeder Baustein nach außen eine Schnittstelle zur Kommunikationskomponente 20 hat. Die gesamte Kommunikation erfolgt vorzugsweise nachrichtenbasiert und wird vollständig über das zweite Modul der Kommunikationskomponente abgewickelt. Dies bedeutet, dass es zweckmäßigerweise keine kommunikativen Querverbindungen zwischen den Servicekomponenten gibt, was zu einer sauberen Kapselung und einer leichten Veränderbarkeit führt.

Zur Abwicklung fachlicher Daten und zur Implementierung von Business-Logik ist als eine der Servicekomponenten erfindungsgemäß eine Prozesskomponente 42 vorgesehen, welche beispielsweise lang laufende Transaktionen beinhalten kann. Dabei führt die Prozesskomponente P in Verbindung mit anderen Servicekomponenten statusbehaftete Prozesse durch, deren Laufzeit über 30 Sekunden oder bis zu Tagen betragen kann. Dabei handelt es sich beispielsweise um die Vergabe eines Auftrags zur Abholung einer Sendung über eine Internetfiliale. Von der Auftragsvergabe im Internet über die Erzeugung eines Versandaufklebers und die Abrechnung der Dienstleistung vergehen unter Umständen Tage, so dass dieser lang laufende Prozess in der Prozesskomponente abgewickelt wird. Verlangt ein Prozess einen Status, ist es vorteilhaft, ihn stets über die Prozesskomponente abzuwickeln.

Die Prozesskomponente 42 ist an eine Routing-Komponente 23 des zweiten Moduls 22 der Kommunikationskomponente 20 angeschlossen, welche die Kommunikation der Prozesskomponente mit anderen angeschlossenen Servicekomponenten und den Umsystemen übernimmt. Statuslose Prozesse werden dagegen über eine Dialogkomponente 41 abgewickelt. Die Routing-Komponente wird angesprochen, wenn Daten auf einem statusbehafteten Offline-Übertragungsweg von den Clients an die Umsysteme übertragen werden sollen. Bei einem statuslosen Online-Aufruf der Dialogkomponente kommt dagegen vorzugsweise ein eigenes Routing der Dialogkomponente zum Tragen. Über die Dialogkomponente D werden somit vorzugsweise Prozesse abgewickelt, die auf dem schnelleren Online-Weg erfolgen sollen. Dabei übernimmt die Dialogkomponente unterschiedliche Aufgaben mit oder ohne Beteiligung der Umsysteme.

Die Prozesskomponente 42 und die Dialogkomponente 41 sind wesentlich für die getrennte Durchführung von statuslosen und statusbehafteten Aufrufen bzw. Prozessen. Je nach Ausbildung des Retail-Systems kann das Backend jedoch weitere Servicekomponenten wie beispielsweise Datenbereitstellungs-, Prüf-, Korrektur- oder Speicherkomponenten umfassen. Den Datenfluss zu den Servicekomponenten und zwischen den Servicekomponenten untereinander steuert die Routing-Komponente 23.

In einem besonders bevorzugten Ausführungsbeispiel der Erfindung umfasst der Funktionsblock der Servicekomponenten wenigstens eine Archivkomponente A, welche anderen Komponenten Dienste anbietet, um Daten zu archivieren oder aus einem Archiv zu lesen. Dienste zum Lesen im Archiv der Archivkomponente können beispielsweise als Web-Service angesprochen werden, der von der Dialogkomponente gehostet wird. Das Archiv kann in einem besonders bevorzugten Ausführungsbeispiel der Erfindung XML-basierte Daten einlagern und auslesen. Ferner sollte in dem Archiv gesucht werden können.

Zusätzlich zur direkten Verwendung als Speicherort kann die Archivkomponente auch implizit genutzt werden, wenn das Archiv als Zwischenstation für zu archivierende Aufrufe angegeben wird. In diesem Fall wird eine Nachricht auf dem Weg zum eigentlichen Empfänger über das Archiv geleitet und automatisch von der Archivkomponente archiviert. Ein Aufruf wird über das Archiv geleitet, dort archiviert und dann seriell an den eigentlichen Empfänger übermittelt. So kann ohne die Notwendigkeit von verteilten Transaktionen eine konsistente Datenhaltung zwischen Archiv und Empfänger einer Nachricht sichergestellt werden. Da auch die Zwischenstation selbst weitere Zwischenschritte für das Nachrichtenrouting angeben kann, besteht ferner die Möglichkeit, dass an zentraler Stelle im Backend die Archivierung von Nachrichten erzwungen werden kann, ohne das eine Client-Applikation angepasst werden muss.

Ferner kann eine Stammdatenbereitstellungskomponente S vorgesehen sein, welche die Belieferung der Clients mit Stammdaten der diversen Umsysteme übernimmt. Zu den Servicekomponenten kann ferner eine Rohdatenkomponente R gehören, welche beispielsweise als Übergabepunkt für Daten der Clients an die Umsysteme dient. Von der Rohdatenkomponente können die Umsysteme beispielsweise nach einer Filterung mit den von ihnen gewünschten Daten in bestimmten Formaten versorgt werden. Gleichzeitig kann die Rohdaten-Komponente die Daten an eine Qualitätskomponente Q zur Prüfung oder buchhalterischen Abstimmung übergeben. Besonders vorteilhaft ist ferner eine Servicekomponente zur Korrektur von fehlerhaften Datensätzen. Zur Vereinfachung der Darstellung sind die möglichen Prüf-, Abstimmungs- und Korrekturprozesse als in der Qualitätskomponente Q gebündelt dargestellt. Zweckmäßig ist jedoch ebenfalls die Kapselung der verschiedenen Aufbereitungsschritte in einzelnen Servicekomponenten, die jeweils an die Routing-Komponente 23 angeschlossen sind.

Die Routing-Komponente ist zweckmäßigerweise so ausgebildet, dass sie aus bei einem Aufruf übermittelten logischen Adressen die entsprechenden physischen Adressen der jeweiligen Servicekomponenten oder Umsysteme erzeugt und Datensätze an die jeweiligen richtigen Ausgänge schicken kann. Diese Ausführungsform ermöglicht es, die Adressen von Zielkomponenten zu verändern und in der Routing-Komponente zu hinterlegen, ohne dass die Struktur der Datensätze angepasst werden muss. Dadurch wird die Modularität des Gesamtsystems erhöht und das System kann sehr flexibel an neue Gegebenheiten angepasst werden.

Wird von der Kommunikationskomponente im Bereich des Frontends der Online-Weg für die Übertragung von Daten gewählt, werden die Daten von dem ersten Modul 21 an das zweite Modul 22 im Backend übermittelt und dort an die Dialogkomponente 41 übergeben. Nachrichten werden von der Dialogkomponente 41 statuslos bearbeitet, wodurch eine schnelle Kommunikation von unter 30 Sekunden ermöglicht werden kann, jedoch kein verlässlicher Transport gegeben ist. Über die Dialogkomponente werden daher vorzugsweise Abfragen von Geschäftslogik oder Datenabfragen in den Umsystemen durchgeführt, es wird jedoch keine Verarbeitung von Daten der Clients vorgenommen.

Ein Beispiel für eine möglichst schnell durchzuführende Kommunikation ist daher die Kundenabfrage von einem Client 10 bei einer Vertriebsdatenbank eines Umsystems 30. Eine wichtige Eigenschaft ist hierbei, dass die aufrufende Komponente im Regelfall auf eine Antwort des Umsystems wartet, bevor sie die Verarbeitung fortsetzt. Daher wird bei der Dialogkomponente vorzugsweise von einer kurzen Laufzeit ausgegangen. Um eine schnelle Kommunikation zu gewährleisten, hat es sich ferner als vorteilhaft erwiesen, dass Anfragen, welche zu lange dauern oder scheitern, durch einen Timeout künstlich beendet werden. So kann ein aufrufender Prozess das Scheitern frühzeitig erkennen und entsprechend reagieren.

In einem Ausführungsbeispiel der Erfindung ist es beispielsweise für die Prozesskomponente 42 für bestimmte Prozesse erforderlich, schnell auf Daten in Vertriebsdatenbanken zugreifen zu können. Um dies zu ermöglichen, kann die Dialogkomponente ebenfalls mit der Routing-Komponente 23 verbunden sein. So können alle Servicekomponenten auf die Dialogkomponente zugreifen, um Online-Aufrufe in angeschlossenen Umsystemen zu machen. Der Prozess würde dann so lange aussetzen, bis die Antwort über die Dialogkomponente vorliegt. Somit führen nicht nur Clients statuslose Online-Aufrufe durch, sondern auch einzelne Servicekomponenten des Backends.

Sowohl die Clients als auch die Umsysteme stellen bei Aufrufen über die Dialogkomponente Daten vorzugsweise im XML-Format bereit. Falls angeschlossene Umsysteme nicht mit dem Datenmodell der Clients arbeiten, kann eine entsprechende Transformation der Nachrichten/Daten erforderlich sein. Dies gilt sowohl für die Anfrage des Clients als auch für die Antwort des Umsystems. Die Transformation erfolgt vorzugsweise im Rahmen einer Umwandlung von XML-Dateien mit der Formatsprache XSL (Extensible Stylesheet language). Die Formatsprache XSL besteht aus zwei Komponenten, von denen die erste Komponente zur Formatierung von XML-Dateien dient. Eine zweite Komponente transformiert XML-Dateien in andere XML-Dateien, wobei für die Transformationskomponente die Bezeichnung XSLT (XSL Transformation) geläufig ist und hier verwendet wird.

Datenmodelle von sendenden Komponenten werden somit durch hinterlegte XSLTs in das jeweilige Datenmodell der empfangenden Komponente transformiert. In einem bevorzugten Ausführungsbeispiel der Erfindung finden dabei ausschließlich statische Zuordnungen statt. Berechnungen und Verkettungen finden dagegen nicht statt.

Die Dialogkomponente 41 kann vorzugsweise wenigstens drei Arten von Aufrufen durchführen. Zum Einen können Aufrufe erfolgen, welche ausschließlich die Businesslogik der Dialogkomponente nutzen. Die Businesslogik ist in der Dialogkomponente hinterlegt und kommt ohne Aufrufe bei Umsystemen aus. Die Logik kann ein komplexer Algorithmus sein, der aufgrund sich stetig verändernder Parameter nicht fest im Frontend hinterlegt werden sollte. Dabei handelt es sich beispielsweise um eine Zinsberechnungskomponente, die nach einer einheitlichen Formel für alle Anwendungen Zinsberechnungen durchführt. Aufrufe an Umsystemen sind dabei nicht erforderlich.

Zum Anderen kann die Dialogkomponente Aufrufe in Form eines einfachen Durchreichens von Daten an ein Umsystem durchführen. Hierbei liegt keine Logik im Aufruf selbst vor, sondern die Dialogkomponente leitet den Aufruf lediglich an ein Umsystem weiter. Dabei kann es sich beispielsweise um das Heraussuchen eines bestimmten Kundensatzes aus einer Datenbank handeln.

Darüber hinaus können Aufrufe aus Logik und Umsystemaufrufen, sowie aus mehreren Umsystemaufrufen bestehen. Solche komplexen Vorgänge werden vorzugsweise von einer Serviceschicht innerhalb der Dialogkomponente abgehandelt. Innerhalb der Serviceschicht befindet sich die gesamte Funktionalität zur Abwicklung des Aufrufs. Über einen einzelnen Aufruf eines Clients an der Dialogkomponente kann so eine beliebig große Kaskade von Aufrufen in unterschiedlicher Abhängigkeit erfolgen. So können beispielsweise Kundendaten aus mehreren Datenbanken abgefragt, entsprechend zusammengestellt und als eine Einheit an den Client im Frontend geleitet werden. Dabei behält die Dialogkomponente keine Daten und kann bestimmte Prozesse nach dem Ablauf einer definierten Zeitspanne wieder verwerfen.

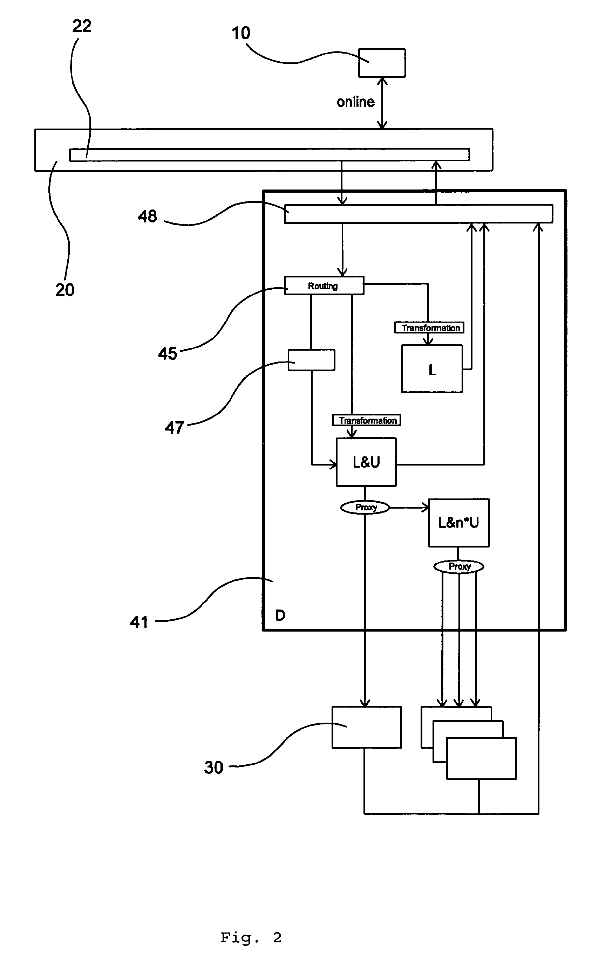

Die Verfahrensschritte bei den verschiedenen genannten Online-Aufrufen und die daran beteiligten Funktionskomponenten der Dialogkomponente 41 sind in Fig. 2 schematisch dargestellt. Erfolgt ein Aufruf durch einen Client 10, wird im ersten Modul der Kommunikationskomponente 20 der Online-Übertragungsweg festgelegt. Der Aufruf wird an das zweite Modul übergeben und eine Schnittstelle 48 der Dialogkomponente empfängt den Aufruf. In einem besonders bevorzugten Ausführungsbeispiel der Erfindung sieht die Kommunikationskomponente 20 einen Adapter vor, welcher Daten direkt in die Dialogkomponente einschreibt, so dass die Dialogkomponente Daten vorzugsweise passiv entgegennimmt.

Vorzugsweise erfolgt jegliche Kommunikation von Komponenten mit der Dialogkomponente 41 über eine Schnittstelle 48. Obwohl dies zur Vereinfachung des Sachverhalts in der Fig. 2 nicht explizit dargestellt ist, erfolgt auch die Kommunikation der Dialogkomponente mit den Umsystemen 30 vorzugsweise über die Kommunikationskomponente. Die Dialogkomponente übergibt dabei eine Nachricht für ein Umsystem an das zweite Modul der Kommunikationskomponente, welches die Nachricht an das Umsystem übergibt.

Für einzelne Servicekomponenten 40 kann es zweckmäßig sein, dass Daten nicht direkt von einer Schnittstelle geholt werden, sondern eine Nachrichten verarbeitende Komponente 44 (Active Message Handler - AMH) diese Aufgabe übernimmt. Ein AMH würde in diesem Fall eine Abstraktionsschicht bilden, welche eine Servicekomponente von der Notwendigkeit befreit, spezifisches Wissen über die Kommunikationskomponente 20 zu haben. Zum anderen kann er den aktiven Part übernehmen, Daten aus der Kommunikationskomponente abzuholen und in eine Servicekomponente hineinzureichen. Dabei ist es eine wichtige Eigenschaft des Active Message Handlers, dass er eine flexible und gleichzeitig standardisierte Möglichkeit bietet, den Nachrichtenverkehr zwischen der Kommunikationskomponente 20 und einzelnen Servicekomponenten des Backends asynchron zu gestalten.

Der AMH wird jedoch gegebenenfalls nur für Servicekomponenten wie die Prozesskomponente, die Rohdatenkomponente, die Stammdatenbereitstellungskomponente oder Qualitätskomponenten eingesetzt, während es vorteilhaft ist, dass insbesondere die Dialogkomponente und die Archivkomponente Daten über einen Adapter in der Kommunikationskomponente passiv empfangen.

Da die Kommunikationskomponente 20 in einem besonders bevorzugten Ausführungsbeispiel der Erfindung so ausgebildet ist, dass sie ein reines Transportmedium ist, das keine Daten aufbewahrt, erwartet die Kommunikationskomponente eine unmittelbare Bestätigung des Empfangs einer Nachricht, nachdem die Dialogkomponente 41 oder eine andere der Servicekomponenten eine Nachricht angefordert hat, da sie eine Nachricht ansonsten zu lange speichern müsste. Dies hat zur Konsequenz, dass es nicht zweckmäßig ist, wenn die Dialogkomponente eine Nachricht abholt, diese vollständig verarbeitet und erst dann den Empfang bestätigt. Die Dialogkomponente bringt die Nachricht daher vorzugsweise schnell an einen sicheren Ort und bestätigt anschließend sofort den Empfang.

Servicekomponenten können ferner über einen Nachrichtenrückkanal verfügen, über welchen Nachrichten aus den Servicekomponenten zurück an die Kommunikationskomponente gegeben werden. Ein Nachrichtenrückkanal ist vorzugsweise als Funktionsbibliothek ausgebildet. Aufgabe dieser Funktionsbibliothek ist die Erleichterung des Umgangs der unterschiedlichen Komponenten des Systems mit der Kommunikationskomponente 20. Entsprechend bietet er Funktionsaufrufe etwa für den korrekten Aufbau von SOAP Envelopes oder er ermöglicht die einfache Übergabe von zu verschickenden Nachrichten.

Erhält die Dialogkomponente 41 eine Nachricht vom zweiten Modul 22 der Kommunikationskomponente, wird diese innerhalb der Dialogkomponente einem Routing übergeben. Innerhalb dieser Routingschicht 45 erfolgt die Entscheidung, welcher der drei genannten Aufruftypen zum Tragen kommt. Ferner wird das jeweils passende Protokoll für den eigentlichen Aufruf an ein Umsystem festgelegt. Die Dialogkomponente 41 umfasst eine Transformationsschicht, welche die Aufgabe hat, ankommende Daten im Datenmodell des Clients in das für das Umsystem passende Datenmodell zu transformieren. Dazu wird vorzugsweise ein hinterlegtes XSLT geladen. Beim umgekehrten Weg einer Antwort von einem Umsystem zum Client fällt die Transformation der Daten in das Datenmodell des Clients ebenfalls in den Aufgabenbereich der Transformationsschicht.

Handelt es sich bei dem Aufruf um einen Aufruf einer einfachen Logik, werden die Daten transformiert und gehen von der Routingschicht 45 direkt an ein Logik-Modul, das in der Fig. 2 mit "L" bezeichnet ist. Das Modul kann aus einer unterschiedlich komplex zusammengesetzten Logik bestehen und nach der Bearbeitung der Anfrage durch die Businesslogik werden die Daten zurückgegeben. Gegebenenfalls werden sie erneut transformiert und über die Schnittstelle 48 an die Kommunikationskomponente 20 übergeben, welche sie an den aufrufenden Client übermittelt.

Der Datenfluss bei einer einfachen Frage an ein Umsystem sieht vorzugsweise vor, dass die Daten von der Routingschicht 45 einem Logik&Umsystem-Modul mit der Bezeichnung "L&U" übergeben werden. Üblicherweise erfolgt vorher ebenfalls eine Transformation. Das Modul L&U erkennt, dass es sich um eine einfache Anfrage handelt und die Daten werden vorzugsweise über einen Proxy an das Umsystem 30 geleitet. Auch wenn dies in der Fig. 2 nicht explizit dargestellt ist, erfolgt die Übermittlung an das Umsystem vorzugsweise ebenfalls über die Kommunikationskomponente 20. Die Antwort des Umsystems gelangt zurück zur Dialogkomponente, welche diese an den aufrufenden Client übermittelt.

Ein vielschichtiger Aufruf, der Logik und ein oder mehrere Umsystemaufrufe umfasst, wird vorzugsweise über ein Modul mit der Bezeichnung "L&n*U" abgewickelt. Die Daten werden in der Regel auch hier transformiert und die Anfrage gelangt zuerst zum Modul L&U für Logik und Umsystem. Dieses Modul erkennt, dass der Aufruf an das Servicemodul L&n*U weitergeleitet werden muss. Über einen Proxy wird so die entsprechende Serviceschicht angesprochen. Innerhalb dieser Schicht werden die notwendigen Aufrufe an die Umsysteme vorzugsweise ebenfalls über einen Proxy abgewickelt. Auch hier erfolgt die Übermittlung der Anfrage und der Antwort jeweils über die Kommunikationskomponente.

Wird von der Kommunikationskomponente im Bereich des Frontends der Offline-Weg für die Übertragung von Daten gewählt, wird über die Routing-Komponente 23 die Prozesskomponente 42 angesprochen. Die Daten werden von dem ersten Modul 21 an das zweite Modul 22 im Backend übergeben und dort von der Routing-Komponente 23 weitergeleitet. Die Routing-Komponente befördert Datensätze an die einzelnen Servicekomponenten im Backend weiter. Da viele Retailsysteme nach den GoB- und GoBS-Anforderungen betrieben werden müssen, ist es zweckmäßig, dass alle Datensätze erst von einer Archivkomponente A in einem Speichermedium archiviert werden, bevor sie seriell von Servicekomponenten weiter bearbeitet werden. Die Routing-Komponente ermöglicht dabei sowohl eine serielle als auch eine parallele Bearbeitung von Datensätzen.

Je nach Art des Aufrufs eines Clients werden die Daten von den an die Routing-Komponente angeschlossenen Servicekomponenten verarbeitet und an die Umsysteme übergeben. Dabei wird von dem Client keine Antwort erwartet, durch die Führung eines Status wird jedoch ein verlässlicher Transport gewährleistet.

Bei den von der Prozesskomponente 42 durchgeführten statusbehafteten Prozessen handelt es sich typischerweise um Prozesse, die wenigstens zweigeteilt sind. Ein erster initiierender Teil findet am Client im Frontend statt, wobei bestimmte Aufträge angenommen und gestartet werden. Ein Beispiel hierfür könnte der Verkauf eines Mobiltelefons sein, dessen Gesamtprozess mit der Erfassung der Auftragsdaten und der Auftragsabgabe nicht abgeschlossen ist. Vielmehr muss nun eine Freischaltung vorgenommen werden, das Mobiltelefon wird möglicherweise einem Transportlogistiker übergeben und wird ausgeliefert. All dies geschieht im Hintergrund, ohne dass es eines weiteren Eingriffs bedarf. Vielmehr laufen die entsprechenden Schritte nach einem vorgegebenen Schema ab und müssen lediglich in der richtigen Reihenfolge initiiert werden.

Die Prozesskomponente stellt dabei eine technische Plattform bereit, die es ermöglicht, neue fachliche Prozesse allein durch Konfiguration zu realisieren. Insbesondere stellt die Komponente vorzugsweise alle notwendigen Werkzeuge bereit, damit bei neuen Prozessen keine Programmierung im klassischen Sinne anfällt. Der Status eines Prozesses wird in der Prozesskomponente 42 solange gehalten, bis der Prozess abgeschlossen ist. Darüber hinaus werden keine Daten behalten.

Da die Prozesskomponente 42 an das zweite Modul 22 der Kommunikationskomponente angeschlossen ist, hat sie über diesen Weg im Bedarfsfall auch Zugriff auf die Dialogkomponente 41, falls diese ebenfalls an die Routing-Komponente 23 angeschlossen ist.

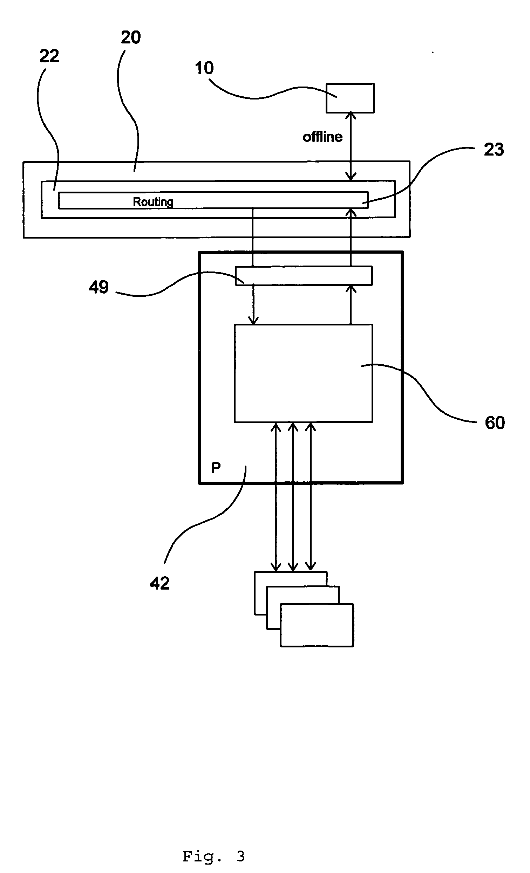

Ein besonders bevorzugtes Ausführungsbeispiel einer Prozesskomponente ist in Fig. 3 dargestellt. Eine Nachricht wird von der Routing-Komponente 23 an eine Schnittstelle 49 der Prozesskomponente und daraufhin einem Container 60 übergeben, der beispielsweise durch ein Messaging System gebildet werden kann. Durch das Messaging System wird eine Anbindung an unterschiedliche Schnittstellen ermöglicht und durch die Orchestrierung des Messaging Systems können beliebig komplexe Prozesse ohne Programmieraufwand aufgesetzt werden. Als Messaging System kann beispielsweise das Produkt BizTalk Server von Microsoft verwendet werden.

Nachrichten werden dem Messaging System übergeben und vorzugsweise in dessen eigener Warteschlange hinterlegt. Von hier aus läuft die Verarbeitung innerhalb des Containers 60 ab, wobei beispielsweise eine Processing Engine die Nachrichten automatisch an die entsprechenden Prozesse übergibt. Dabei kann eine beliebige Anzahl gleichartiger oder unterschiedlicher Prozesse parallel gehandhabt werden. Ferner können die einzelnen Prozesse jederzeit über die Kommunikationskomponente mit anderen Servicekomponenten kommunizieren. Die Prozesskomponente 42 wickelt so gegebenenfalls im Zusammenspiel mit anderen Servicekomponenten und Umsystemen einen statusbehafteten Offline-Aufruf ab.

Dabei kann die Routing-Komponente 23 des zweiten Moduls der Kommunikationskomponente ein beliebiges Routing unterstützen. Beispielsweise könnte das Frontend eine Nachricht an das Backend schicken mit den Routinginformationen (*A,P,R). Die Routing-Komponente würde die Nachricht wie folgt interpretieren: Sende Daten an Archivkomponente A und warte bis A eine Bestätigung gibt (gekennzeichnet durch *). Sende danach an die Prozesskomponente P und parallel an die Rohdatenkomponente R. Ein weiteres Routing (P,Q,R,D) könnte dagegen bedeuten, eine Nachricht parallel an P, Q, R und D zu schicken. Auch komplexere Routings wie (*(A,P),R,D) können realisiert werden, bei denen das Routing Daten an A und P parallel schickt und erst nach der Bestätigung durch diese beiden Komponenten parallel an R und D schickt.

### Bezugszeichenliste:

- 10: Client
- 20: Kommunikationskomponente
- 21: Erstes Modul der Kommunikationskomponente im Bereich des Frontends
- 22: Zweites Modul der Kommunikationskomponente im Bereich des Backends
- 23: Routing-Komponente des zweiten Moduls der Kommunikationskomponente
- 30: Umsystem
- 40: Servicekomponenten des Backends
- 41,D: Dialogkomponente
- 42,P: Prozesskomponente
- 45: Routingschicht der Dialogkomponente
- 47: Persistenzmedium der Dialogkomponente
- 48: Schnittstelle der Dialogkomponente
- 49: Schnittstelle der Prozesskomponente
- 50: Sicherheitsschicht
- 60: Container, Messaging System der Prozesskomponente

- A: Archivkomponente
- Q: Qualitätskomponente
- S: Stammdatenbereitstellungskomponente
- R: Rohdatenkomponente

- FE: Frontend
- BE: Backend

## Patentansprüche

1. Anordnung von Vorrichtungen, bestehend aus wenigstens einem Client (10) in einem Frontend, der über eine Kommunikationskomponente (20) mit einem Backend in Verbindung steht, wobei das Backend durch mehrere Servicekomponenten (40) gebildet wird und an die Kommunikationskomponente (20) ferner mehrere Umsysteme (30) angeschlossen sind, wobei die Kommunikationskomponente (20) ein erstes Modul (21) im Bereich des Clients (10) umfasst und das Modul (21) Mittel zur Auswahl von zwei Übertragungswegen für Nachrichten von dem Client (10) zu den Servicekomponenten (40) aufweist, wobei der erste Übertragungsweg statuslos ist und der Client eine Antwort erwartet, während der zweite Übertragungsweg statusbehaftet ist und der Client keine Antwort erwartet,
**gekennzeichnet**
**durch** folgende Merkmale:
- Backend umfasst ein zweites Modul (22) der Kommunikationskomponente (20), das in Verbindung mit dem ersten Modul (21) steht;
- zweites Modul (22) der Kommunikationskomponente (20) umfasst eine Routing-Komponente (23), an welche wenigstens eine Prozesskomponente (42) angeschlossen ist, die Mittel zur Durchführung von statusbehafteten Prozessen aufweist;
- zweites Modul (22) der Kommunikationskomponente (20) ist an eine Dialogkomponente (41) angeschlossen, welche Mittel zur Durchführung von statuslosen Prozessen aufweist;
- zweites Modul (22) der Kommunikationskomponente (20) umfasst Mittel zur Verteilung von Nachrichten eines Clients (10) an die Routing-Komponente (23) oder die Dialogkomponente (41) in Abhängigkeit von der Auswahl des Übertragungswegs im ersten Modul (21) der Kommunikationskomponente (20); und
- Routing-Komponente (23) weist Mittel zur Steuerung von Datenflüssen zwischen der Prozesskomponente (42) und den Servicekomponenten (40) auf.

2. Anordnung nach Anspruch 1,
**dadurch gekennzeichnet,**
**dass** von den Servicekomponenten (40) wenigstens die Dialogkomponente (41) und die Prozesskomponente (42) jeweils eine Schnittstelle (48;49) zum Transfer von Nachrichten der jeweiligen Komponente mit dem zweiten Modul (22) der Kommunikationskomponente (20) aufweisen.

3. Anordnung nach einem oder beiden der Ansprüche 1 und 2,
**dadurch gekennzeichnet,**
**dass** die Dialogkomponente (41) wenigstens die folgenden zwei Module zur Verarbeitung von Nachrichten umfasst:
- Modul zur Durchführung von Logik ohne Einbeziehung von Umsystemen,
- Modul zur Durchführung einer Logik unter Einbeziehung von Umsystemen.

4. Anordnung nach einem oder mehreren der Ansprüche 1 bis 3,
**dadurch gekennzeichnet,**
**dass** die Dialogkomponente (41) Mittel zur Transformation von Nachrichten in ein Datenmodell der Dialogkomponente und Mittel zur Transformation von Nachrichten in ein Datenmodell des Empfängers umfasst.

5. Anordnung nach einem oder mehreren der Ansprüche 1 bis 4,
**dadurch gekennzeichnet,**
**dass** die Prozesskomponente (42) ein aufsetzbares Messaging System zur Verarbeitung und Steuerung von Nachrichten aufweist.

6. Verfahren zur Übermittlung von Nachrichten zwischen wenigstens einem Client (10), Servicekomponenten (40) eines Backends und Umsystemen (30) über eine Kommunikationskomponente (20), bei dem im Bereich des Clients ein erstes Modul (21) der Kommunikationskomponente (20) angeordnet wird und durch Mittel des ersten Moduls (21) eine Auswahl zwischen zwei Übertragungswegen für Nachrichten von dem Client (10) zu den Servicekomponenten (40) getroffen wird, wobei der erste Übertragungsweg statuslos ist und der Client eine Antwort erwartet, während der zweite Übertragungsweg statusbehaftet ist und der Client keine Antwort erwartet,
**gekennzeichnet**
**durch** folgende Schritte:
- Übertragung einer Nachricht und der Auswahl des Übertragungswegs vom ersten Modul (21) an ein zweites Modul (22) der Kommunikationskomponente;
- Übergabe der Nachricht vom zweiten Modul (22) an eine Dialogkomponente (41), falls ein statusloser Übertragungsweg festgelegt wurde und Verarbeitung der Nachricht durch die Dialogkomponente (41);
- Übergabe der Nachricht vom zweiten Modul (22) an eine Routing-Komponente (23) innerhalb der Kommunikationskomponente (20), welche die Nachricht an eine Prozesskomponente (42) übergibt, falls ein statusbehafteter Übertragungsweg festgelegt wurde und Verarbeitung der Nachricht durch die Prozesskomponente (42).

7. Verfahren nach Anspruch 6,
**dadurch gekennzeichnet,**
**dass** eine Nachricht von der Prozesskomponente (42) unter Einbeziehung weiterer Servicekomponenten (40) verarbeitet wird, wobei die Kommunikation zwischen den beteiligten Servicekomponenten (40) von der Routing-Komponente (23) gesteuert wird.

8. Verfahren nach einem oder beiden der Ansprüche 6 und 7,
**dadurch gekennzeichnet,**
**dass** der Nachrichtentransfer der Dialogkomponente (41) und der Prozesskomponente (42) mit der Kommunikationskomponente (20) über eine Schnittstelle (48;49) erfolgt.

9. Verfahren nach einem oder mehreren der Ansprüche 6 bis 8,
**dadurch gekennzeichnet,**
**dass** Nachrichten in der Dialogkomponente (41) von einem der folgenden zwei Module verarbeitet werden:
- Modul zur Durchführung von Logik ohne Einbeziehung von Umsystemen,
- Modul zur Durchführung einer Logik unter Einbeziehung von Umsystemen.

10. Verfahren nach einem oder mehreren der Ansprüche 6 bis 9,
**dadurch gekennzeichnet,**
**dass** Nachrichten in der Dialogkomponente (41) vor der Verarbeitung in ein Datenmodell der Dialogkomponente und nach der Verarbeitung in ein Datenmodell des Empfängers transformiert werden.

11. Verfahren nach einem oder mehreren der Ansprüche 6 bis 10,
**dadurch gekennzeichnet,**
**dass** Nachrichten in einer Archivkomponente A archiviert und seriell zu einer anderen Servicekomponente (40) weitergeleitet werden.

12. Verfahren nach einem oder mehreren der Ansprüche 6 bis 11,
**dadurch gekennzeichnet,**
**dass** die Routing-Komponente (23) logischen Zieladressen von Nachrichten physische Adressen von Servicekomponenten (40) und/oder Umsystemen (30) zuordnet und die Nachrichten an die entsprechenden Komponenten übergibt.

13. Computerlesbares Medium, das Befehle zum Ausführen der Schritte des Verfahrens nach einem oder mehreren der Ansprüche 6 bis 12 auf einem Computermittel umfasst.
